# EUROPÄISCHE PATENTSCHRIFT

(11) **EP 2 870 386 B1**
(45) Veröffentlichungstag und Bekanntmachung des Hinweises auf die Patenterteilung: **27.05.2020**
(21) Anmeldenummer: 13727874.3
(22) Anmeldetag: 06.06.2013
(51) Int. Cl.: F16H 63/20, F16H 63/18, F16H 59/04, F16H 61/34, F16H 61/28

(54) **SCHALTEINRICHTUNG ZUM SCHALTEN EINES GETRIEBES**
SHIFTING DEVICE FOR SHIFTING A TRANSMISSION
DISPOSITIF DE COMMUTATION POUR LE PASSAGE DE VITESSES

(30) Priorität: 06.07.2012 DE 102012211785
(43) Veröffentlichungstag der Anmeldung: 13.05.2015
(73) Patentinhaber: Bayerische Motoren Werke Aktiengesellschaft, 80809 München (DE)
(72) Erfinder: OHNEMUS, Ulrich, 82285 Hattenhofen (DE); POBITZER, Fritz, 81927 München (DE)
(86) Internationale Anmeldenummer: PCT/EP2013/061685
(87) Internationale Veröffentlichungsnummer: WO 2014/005788

(56) Entgegenhaltungen:
- WO-A1-03/040596
- DE-A1- 3 237 953
- DE-A1-102004 006 682
- FR-A1- 2 566 342
- GB-A- 666 874

## Beschreibung

Die vorliegende Erfindung betrifft eine Schalteinrichtung zum Schalten eines Getriebes gemäß den Merkmalen des Patentanspruches 1.

Eine derartige Schalteinrichtung ist aus der WO 03/040596 A1 bekannt.

Aus der älteren, nicht vorveröffentlichten deutschen Patentanmeldung DE 10 2012 204 562.7 ist ein Verfahren zum Schalten eines Getriebes nach dem sogenannten "Duo-Synchro-Prinzip" bekannt. Bei dem Getriebe handelt es sich um ein Handschaltgetriebe, d. h. um ein Getriebe, bei dem die einzelnen Schaltelemente rein mechanisch per Handkraft geschaltet werden. Ein derartiges Handschaltgetriebe benötigt keine Schaltaktuatorik bzw. Schaltsensorik. Das dort beschriebene Verfahren zeichnet sich dadurch aus, dass zum Erreichen eines jeden der möglichen Zielschaltzustände stets genau zwei Schaltelemente geschlossen werden ("Duo-Synchro-Schaltung") und zwar nacheinander im Sinne von nicht gleichzeitig.

Aufgabe der vorliegenden Erfindung ist es, eine Schalteinrichtung zu schaffen, welche bei einem Handschaltgetriebe derartige Duo-Synchro-Schaltungen ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Schalteinrichtung zum Schalten eines Getriebes, welches mehrere Schaltelemente aufweist, bei den es sich z. B. um Schaltmuffen handeln kann, denen jeweils eine Synchronisiereinrichtung zugeordnet sein kann. Zum Schalten der einzelnen Schaltelemente bzw. der einzelnen Gänge des Getriebes ist eine (zentrale) Schaltwelle vorgesehen. Die Schaltwelle ist drehbar gelagert. Durch Betätigen eines Schalthebels kann die Schaltwelle von Hand in vorgegebene Drehstellungen (Schaltgassen) gedreht werden. In jeder ihrer Drehstellungen bzw. Schaltgassen kann die Schaltwelle mittels des Schalthebels in Längsrichtung der Schaltwelle verschoben werden, wodurch einzelne Gänge des Getriebes ein- bzw. ausgelegt werden.

Der Kern der Erfindung besteht darin, dass in mindestens einer Drehstellung der Schaltwelle (d. h. in mindestens einer der Schaltgassen des Schalthebels bzw. des Getriebes) durch das Verschieben der Schaltwelle mindestens zwei Schaltelemente betätigbar sind. Die Schaltwelle kann so konzipiert sein, dass die mindestens zwei Schaltelemente gleichphasig bzw. zeitlich parallel, phasenverschoben überschneidend bzw. zeitlich überlappend oder phasenverschoben versetzt, d. h. zeitlich nacheinander betätigt werden. Getriebe, welche eine derartige "Duo-Synchro-Schaltung" ermöglichen, können sehr kompakt aufgebaut sein.

Gemäß der Erfindung weist die Schaltwelle mehrere "Schaltabschnitte" auf. Jedem der Schaltabschnitte ist jeweils eine "Umsetzungseinrichtung" zugeordnet, mittels der eine Verschiebebewegung der Schaltwelle in einer vorgegebenen Drehstellung der Schaltwelle in eine Schaltbewegung eines dem jeweiligen Schaltabschnitt zugeordneten Schaltelements umgesetzt wird. Bei einer derartigen Umsetzeinrichtung kann es sich z.B. um eine mehr oder weniger komplizierte Kulissen-/Aufnehmer-/Hebelanordnung handeln, worauf später noch näher eingegangen wird.

Nach einer Weiterbildung der Erfindung weist jeder der Schaltabschnitte ein sich in Richtung der Längsachse der Schaltwelle veränderndes Querschnittsprofil auf. Das sich in Längsrichtung der Schaltwelle verändernde Querschnittsprofil fungiert bei einer Verschiebung der Schaltwelle als "Kulisse" (d.h. als Geberelement).

Gemäß der Erfindung weist jeder der Schaltabschnitte dementsprechend einen sich in Richtung der Längsachse der Schaltwelle erstreckenden Kulissenabschnitt auf, welcher mit einem Aufnehmer (Nehmerelement) zusammenwirkt, bei dem es sich z. B. um einen Gleitstein, um eine Aufnehmerrolle o. ä. handeln kann.

Der Aufnehmer der Umsetzungseinrichtung gleitet während eines Schaltvorgangs an dem sich in Längsrichtung der Schaltwelle erstreckenden Kulissenabschnitt entlang oder rollt oder auf dem Kulissenabschnitt ab. Durch Verschieben der Schaltwelle in ihrer Längsrichtung wird der Aufnehmer in einer Radialrichtung entsprechend dem "Höhenprofil des Kulissenabschnitts" verschoben und zwar in ein zur Längsachse der Schaltwelle senkrechten Ebene. Durch eine derartige Kulissen-/Aufnehmeranordnung wird eine Verschiebebewegung der Schaltwelle in eine Radialbewegung des Aufnehmers bzw. des mit dem Kulissenabschnitt zusammenwirkenden Aufnehmerbereichs umgesetzt. Diese Bewegung wird wiederum auf ein ein Schaltelement betätigendes "Betätigungselement" übertragen. Bei dem "Betätigungselement" kann es sich beispielsweise um eine Schaltgabel oder um eine Schaltschwinge handeln.

Nach einer Weiterbildung der Erfindung weist der Aufnehmer zwei einander gegenüberliegende (auf einem Kreis in einem Abstand von 180° zueinander angeordnete) "Abtastelemente" auf, die z.B. durch Gleitschuhe, Abtastrollen o.ä. gebildet sein können und die auf einander gegenüberliegenden Seiten eines Schaltabschnitts an Kulissenbahnen desselben anliegen.

Eine derartige "Zwangsführung" kann zur "Verriegelung" von Schaltpositionen einzelner Schiebemuffen genutzt werden.

Wie oben bereits erwähnt, werden beim Verschieben der Schaltwelle in mindestens einer ihrer Drehstellungen (d. h. in mindestens einer der möglichen Schaltgassen) zwei Schaltelemente mittels zweier zugeordneter Schaltabschnitte der Schaltwelle betätigt ("Duo-Synchro-Schaltvorgangs"). Die übrigen Schaltelemente bleiben während eines derartigen "Duo-Synchro-Schaltvorgangs" unbetätigt. Die zugeordneten Aufnehmer der den unbetätigten Schaltelementen zugeordneten Umsetzungseinrichtungen werden dabei lediglich in Längsrichtung der Schaltwelle relativ zu dieser bewegt, nicht aber in Quer- oder Radialrichtung zur Schaltwelle. In diesem Fall ist das sich in Längsrichtung der Schaltwelle erstreckende "Querschnittshöhenprofil" des zugeordneten Kulissenabschnitts gerade im Sinne von "parallel zur Längsrichtung der Schaltwelle".

Nach einer Weiterbildung der Erfindung weist mindestens einer der Schaltabschnitte der Schaltwelle zwei oder mehr als zwei in Umfangsrichtung der Schaltwelle voneinander beabstandete, radial abstehenden Rippen auf. Radiale Außenflächen der Rippen bilden Kulissenabschnitte für die einzelnen vorgegebenen Drehstellungen der Schaltwelle, welche den einzelnen Schaltgassen im Schaltschema eines Handschalthebels entsprechen.

Bei einem Wechsel der Schaltgasse, d. h. bei einem Verschwenken des Schalthebels in Querrichtung, d. h. in der Neutralschaltgasse, müssen die Aufnehmer der einzelnen Umsetzungseinrichtungen von einem Kulissenabschnitt zu einem anderen Kulissenabschnitt, d.h. von einer Rippe zu einer anderen Rippe wechseln können. Hierfür sind die einzelnen Rippen eines jeden Schaltabschnitts über einen sich in Umfangsrichtung erstreckenden Verbindungsabschnitt miteinander verbunden. Bei einem Wechsel der Schaltgasse gleitet der zugeordnete Aufnehmer oder rollt der zugeordnete Aufnehmer auf dem Verbindungsabschnitt von einer Rippe zur anderen Rippe bzw. von einem Kulissenabschnitt zu einem anderen Kulissenabschnitt.

Wie bereits mehrfach angedeutet, kann die Schaltwelle durch Betätigen eines Handschalthebels verdreht und in Längsrichtung verschoben werden. Hierzu ist eine Kopplungseinrichtung vorgesehen, über die der Schalthebel mit der Schaltwelle gekoppelt ist. Die Kopplungseinrichtung weist erste Kopplungselemente auf, welche eine Quer-Schwenkbewegung des Schalthebels, d. h. eine Bewegung des Schalthebels von einer Schaltgasse in eine daneben liegende Schaltgasse, in eine Drehbewegung der Schaltwelle umsetzen.

Die Kopplungseinrichtung weist ferner zweite Kopplungselemente auf, welche eine Längs-Schwenkbewegung des Schalthebels, d. h. ein Verschwenken des Schalthebels innerhalb einer bestimmten Schaltgasse in eine Verschiebebewegung der Schaltwelle umsetzen.

Eine derartige Schalteinrichtung kann so in ein Fahrzeug eingebaut sein, dass die Schaltwelle parallel zu einer Längsrichtung des Getriebes, d. h. parallel zu einer Getriebeeingangswelle, oder quer bzw. senkrecht dazu ist.

Im Folgenden wird die Erfindung im Zusammenhang mit der Zeichnung näher erläutert. Es zeigen:
- Figur 1: ein Ausführungsbeispiel eines Siebenganghandschaltgetriebes, das nach dem "Duo-Synchro-Prinzip" schaltbar ist;
- Figur 2: eine Schaltmatrix zur Erläuterung der einzelnen Schaltvorgänge des Getriebes der Fig. 1;
- Figur 3: das Grundprinzip einer Schalteinrichtung (innere Schaltung) gemäß der Erfindung;
- Figur 4: eine Detailansicht eines Schaltabschnitts der in Figur 3 gezeigten Schaltwelle;
- Figur 5: eine erste Variante von Umsetzungseinrichtungen; und
- Figur 6: eine zweite Variante von Umsetzungseinrichtungen.

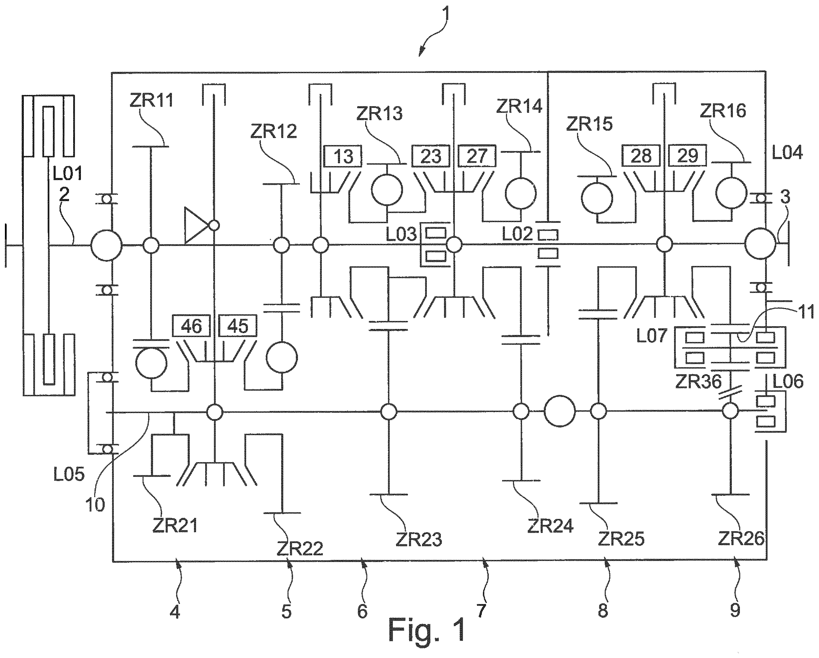

Figur 1 zeigt ein Handschaltgetriebe 1, das eine Getriebeeingangswelle 2 und eine Getriebeausgangswelle 3 aufweist.

Das Handschaltgetriebe 1 weist insgesamt sechs Zahnradebenen 4 - 9 auf.

Die erste Zahnradebene 4 ist durch ein drehfest auf der Getriebeeingangswelle 2 angeordnetes Zahnrad ZR11 und ein damit kämmendes, drehbar auf einer parallel zur Getriebeeingangswelle 2 angeordneten Vorgelegewelle 10 gelagertes Zahnrad ZR21 gebildet.

Die zweite Zahnradebene 5 ist durch die beiden Zahnräder ZR12 und ZR22 gebildet. Das Zahnrad ZR12 ist drehfest auf der Getriebeeingangswelle 2 angeordnet und kämmt mit dem Zahnrad ZR22, welches drehbar auf der Vorgelegewelle 10 angeordnet ist.

Die dritte Zahnradebene ist durch die beiden Zahnräder ZR13 und ZR23 gebildet. Das Zahnrad ZR13 ist drehbar auf der Getriebeeingangswelle 2 angeordnet. Es kämmt mit dem Zahnrad ZR23, welches drehfest auf der Vorgelegewelle 10 angeordnet ist.

Die vierte Zahnradebene 7 ist durch die beiden Zahnräder ZR14 und ZR24 gebildet. Das Zahnrad ZR14 ist drehbar auf der Getriebeausgangswelle 3 angeordnet und kämmt mit dem Zahnrad ZR24, welches drehfest auf der Vorgelegewelle 10 angeordnet ist.

Die fünfte Zahnradebene ist durch die beiden Zahnräder ZR15 und ZR25 gebildet. Das Zahnrad ZR15 ist drehbar auf der Getriebeausgangswelle 3 angeordnet und kämmt mit dem Zahnrad ZR25, welches drehfest auf der Vorgelegewelle 10 angeordnet ist.

Die sechste Zahnradebene ist durch die beiden Zahnräder ZR16 und ZR26 gebildet. Das Zahnrad ZR16 ist drehbar auf der Getriebeausgangswelle 3 angeordnet und kämmt mit einem Zwischenrad 11, welches wiederum mit dem Zahnrad ZR26 kämmt, das drehfest auf der Vorgelegewelle 10 angeordnet ist.

Bei den drehbar auf ihren jeweiligen Wellen angeordneten Zahnrädern ZR21, ZR22, ZR13, ZR14, ZR15, ZR16 handelt es sich um schaltbare Zahnräder, d. h. um Zahnräder, die durch Betätigen eines zugeordneten Schaltelements, das z. B. durch eine Schiebemuffe gebildet sein kann, drehfest mit der betreffenden Welle gekoppelt werden können. Ein derartiges Schaltelement besteht beispielsweise aus einer Schiebemuffe und einer Synchronisationseinrichtung nach dem Borg-Warner-Prinzip mit einem Ein-, Zwei- oder Drei-Reibkonus-System und entsprechend ausgestalteter Kupplungsverzahnung. Über ein derartiges Schaltelement kann ein drehbar auf einer Welle gelagertes Zahnrad mit der Welle synchronisiert und nach dem Synchronisieren mit der Welle drehgekoppelt werden.

So kann das Zahnrad ZR21 in Eingriff mit dem Schaltelement 46 gebracht werden und somit mit der Vorgelegewelle 10 drehgekoppelt werden. Das Zahnrad ZR22 kann in Eingriff mit dem Schaltelement 45 gebracht werden und somit mit der Vorgelegewelle 10 drehgekoppelt werden.

Das Zahnrad ZR13 kann wahlweise mit dem Schaltelement 13 in Eingriff gebracht und somit mit der Getriebeeingangswelle 2 drehgekoppelt werden und/oder mit dem Schaltelement 23 in Eingriff gebracht werden und somit mit der Getriebeausgangswelle 3 drehgekoppelt werden. Wird das Zahnrad ZR13 gleichzeitig mit den beiden Schaltelementen 13 und 23 in Eingriff gebracht, so wird hierdurch die Getriebeeingangswelle 2 direkt mit der Getriebeausgangswelle 3 drehgekoppelt (Direktgang).

Das Zahnrad ZR14 kann mit dem Schaltelement 27 in Eingriff gebracht und somit mit der Getriebeausgangswelle 3 drehgekoppelt werden. Das Zahnrad ZR15 kann mit dem Schaltelement 28 in Eingriff und somit mit der Getriebeausgangswelle 3 drehgekoppelt werden. Das Zahnrad ZR16 kann mit dem Schaltelement 29 in Eingriff und somit mit der Getriebeausgangswelle 3 drehgekoppelt werden.

Wie aus Figur 1 ersichtlich ist, sind bei dem dort gezeigten Handschaltgetriebe 1 sowohl auf der Getriebeeingangswelle 2 als auch auf der Getriebeausgangswelle 3 wie auch auf der Vorgelegewelle 10 jeweils einzelne Zahnräder schaltbar, nämlich die bereits mehrfach erwähnten Zahnräder ZR21, ZR22, ZR13, ZR14, ZR15 und ZR16.

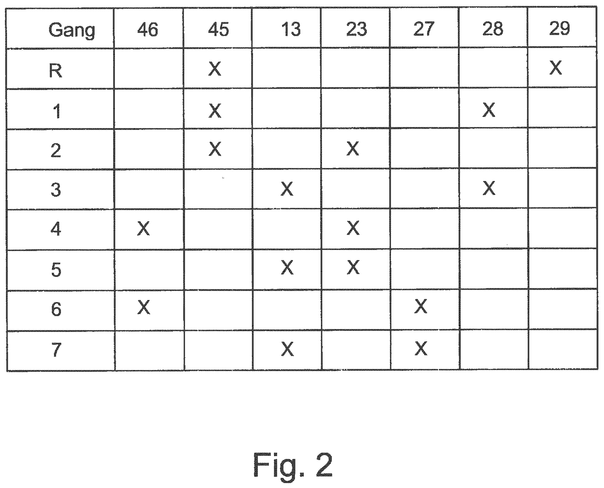

Mit dem in Figur 1 gezeigten Handschaltgetriebe 1 können sieben Vorwärtsgänge (Gänge 1 bis 7) und ein Rückwärtsgang R dargestellt werden. Die in Figur 2 gezeigte Schaltmatrix erläutert für die einzelnen Schaltzustände bzw. Gänge den Schaltzustand der Schaltelemente 13, 23, 27, 28, 29, 45 und 46. Ein "X" bedeutet, dass das jeweilige Schaltelement geschlossen ist, d. h. dass es mit dem zugeordneten Zahnrad in Eingriff steht. Leere Tabellenfelder bedeuten, dass die jeweiligen Schaltelemente geöffnet sind.

Wie oben bereits erwähnt, stehen in jedem Gang genau zwei Schaltelemente in Eingriff. Alle übrigen Schaltelemente sind geöffnet. Für das Einlegen eines Ganges gibt es eine "definierte Schaltreihenfolge", die sich z.B. dadurch auszeichnet, dass stets dasjenige Schaltelement ("Primär-Synchro") der beiden zu schließenden Schaltelemente zuerst geschlossen wird, das in Kraftflussrichtung dem Getriebeausgang näher ist. Dadurch können die Synchronisationsreibmomente auf der größeren, abtriebsseitigen "Trägheit" abgestützt werden.

Nichtsdestotrotz könnte die Primär-Synchro auch durch das dem Getriebeeingang nähere der beiden zu schließenden Schaltelemente gebildet sein und die Sekundär-Synchro durch dasjenige der beiden Schaltelemente, welches dem Getriebeausgang näher ist. Wichtig festzuhalten bleibt, dass ein "Durchmischen" nicht sinnvoll und nicht darstellbar ist, d.h. eine Primär-Synchro ist stets eine Primär-Synchro, eine Sekundär-Synchro stets eine Sekundär-Synchro.

Zum Einlegen des Rückwärtsgangs müssen die beiden Schaltelemente 45 und 29 geschlossen werden, wobei zuerst das Schaltelement 29 und erst anschließend das Schaltelement 45 geschlossen wird. Im Rückwärtsgang wird Drehmoment von der Getriebeeingangswelle 2 über das Zahnrad ZR12 auf das Zahnrad ZR22 und von diesem über das Schaltelement 45 auf die Vorgelegewelle 10 übertragen. Von der Vorgelegewelle 10 wird Drehmoment über das Zahnrad ZR26 auf das Zwischenrad 11 und von diesem auf das Zahnrad 16 und weiter über das Schaltelement 29 auf die Getriebeeingangswelle 3 übertragen.

Zum Einlegen des ersten Ganges müssen die beiden Schaltelemente 45 und 28 geschlossen werden, wobei auch hier zunächst das der Getriebewelle 3 "nähere" Schaltelement 28 geschlossen wird und erst danach das Schaltelement 45. Im ersten Gang wird das Drehmoment von der Getriebeeingangswelle 2 über die Zahnräder ZR12 und ZR22 sowie das Schaltelement 45 auf die Vorgelegewelle 10 und von dieser über die Zahnräder ZR25 und ZR15 sowie das Schaltelement 28 auf die Getriebeausgangswelle 3 übertragen.

Zum Einlegen des zweiten Ganges müssen die Schaltelemente 45 und 23 geschlossen werden, wobei hier zunächst das Schaltelement 23 und anschließend das Schaltelement 45 geschlossen wird. Im zweiten Gang wird Drehmoment von der Getriebeeingangswelle 2 über die Zahnräder ZR12 und ZR 22 sowie das Schaltelement 45 auf die Vorgelegewelle 10 und von dieser über die Zahnräder ZR23 und ZR13 sowie das Schaltelement auf die Getriebeausgangswelle 3 übertragen.

Zum Einlegen des dritten Ganges müssen die Schaltelemente 13 und 28 geschlossen werden, wobei zunächst das Schaltelement 28 und erst anschließend das Schaltelement 13 geschlossen wird. Im dritten Gang wird Drehmoment von der Getriebeeingangswelle 2 über das Schaltelement 13 auf das Zahnrad ZR13 und von diesem auf das Zahnrad ZR23 übertragen. Das Zahnrad ZR23 ist mit der Vorgelegewelle 10 drehgekoppelt. Somit wird Drehmoment weiter über die Zahnräder ZR25 und ZR15 und das Schaltelement 28 auf die Getriebeausgangswelle 3 übertragen.

Zum Einlegen des vierten Ganges müssen die Schaltelemente 46 und 23 geschlossen werden, wobei zunächst das Schaltelement 23 und anschließend das Schaltelement 46 geschlossen wird. Im vierten Gang wird Drehmoment von der Getriebeeingangswelle 2 über die Zahnräder ZR11 und ZR21 sowie das Schaltelement 46 auf die Vorgelegewelle 10 und von dieser über die Zahnräder ZR23 und ZR13 sowie das Schaltelement 23 auf die Getriebeausgangswelle 3 übertagen.

Zum Einlegen des fünften Ganges müssen die Schaltelemente 13 und 23 geschlossen werden, wobei zunächst das Schaltelement 23 und anschließend das Schaltelement 13 geschlossen wird. Im fünften Gang wird Drehmoment von der Getriebeeingangswelle 2 über das Schaltelement 13 auf das Zahnrad ZR13 und von über das Schaltelement 23 direkt auf die Getriebeausgangwelle 3 übertragen (Direktgang).

Zum Einlegen des sechsten Ganges müssen die beiden Schaltelemente 46 und 27 geschlossen werden, wobei zunächst das Schaltelement 27 und anschließend das Schaltelement 46 geschlossen wird. Im sechsten Gang wird Drehmoment von der Getriebeeingangswelle 2 über die Zahnräder ZR11 und ZR22 sowie das Schaltelement 46 auf die Vorgelegewelle 10 und von dieser über die Zahnräder ZR24, ZR14 und das Schaltelement 27 auf die Getriebeausgangswelle 3 übertragen.

Zum Einlegen des siebten Ganges müssen die Schaltelemente 13 und 27 geschlossen werden, wobei zunächst das Schaltelement 27 und anschließend das Schaltelement 13 geschlossen wird. Im siebten Gang wird Drehmoment von der Getriebeeingangswelle über das Schaltelement 13 auf das Zahnrad ZR13 und von über das Zahnrad ZR23 auf die Vorgelegewelle 10 übertragen. Von der Vorgelegewelle 10 wird Drehmoment über die Zahnräder ZR24 und ZR14 und das Schaltelement 27 auf die Getriebeausgangswelle 3 übertragen.

Fig. 2 zeigt die Schaltmatrix des in Fig. 1 gezeigten Getriebes. In der obersten Zeile sind die einzelnen Schaltelemente 46, 45, 13, 23, 27, 28, 29. In der linken Spalte sind die einzelnen Gänge eingetragen. Ein "x" bedeutet, dass ein Schaltelement geöffnet ist. Ein leeres Tabellenfeld bedeutet, dass das jeweilige Schaltelement geöffnet ist.

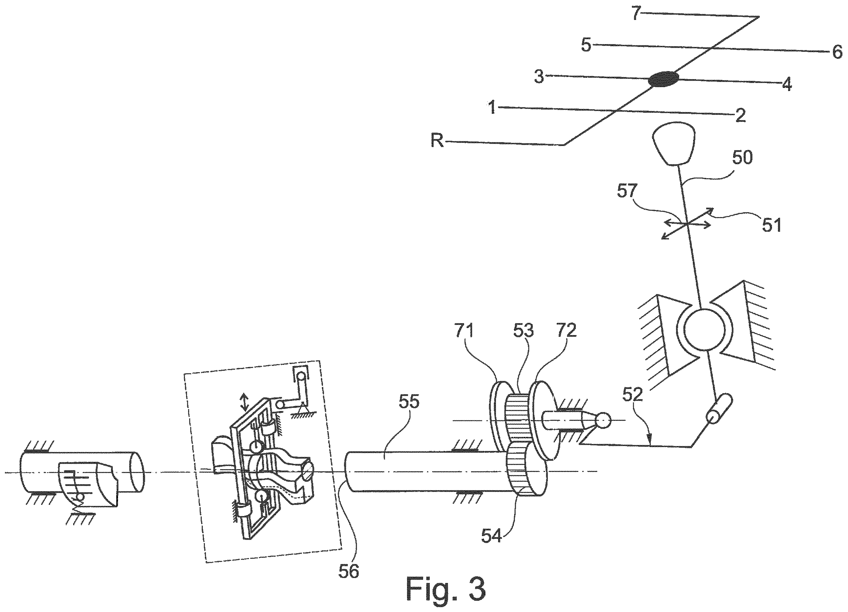

Figur 3 zeigt eine Schalteinrichtung, die mittels eines von Hand zu betätigenden Schalthebels 50 betätigbar ist. Der Schalthebel 50 ist entsprechend einem klassisches "H-Schaltschema" schaltbar. Der Rückwärtsgang R befindet sich links vorne, der siebte Gang rechts vorne. Die Gangpaare 1, 2 bzw. 3, 4 bzw. 5, 6 liegen jeweils in einer Schaltgasse hintereinander.

Soll ein Gang ausgelegt und ein anderer Gang eingelegt werden, so müssen zunächst die beiden momentan geschlossenen Schaltelemente geöffnet werden. Es wird also zunächst in einen Leerlaufzustand geschaltet, in dem alle Schaltelemente geöffnet sind. Anschließend werden in der oben erläuterten Reihenfolge die beiden Schaltelemente des gewünschten Zielgangs eingelegt.

Es kann vorgesehen sein, dass der Leerlaufzustand bereits erreicht wird, wenn der Schalthebel von einem momentan eingelegten Gang in die Mittelschaltgasse (vgl. Figur 3) bewegt wird. Zum Einlegen des Leerlaufzustandes muss der Schalthebel also nicht notwendigerweise in die mit N gekennzeichnete Mittelstellung verschwenkt werden. Es genügt, wenn der Schalthebel von einem zuletzt eingelegten Gang in die Mittelschaltgasse 12 ausgerückt wird.

Durch Verschwenken des in Figur 3 gezeigten Schalthebels 50 in einer Querrichtung 51 können die einzelnen Schaltgassen angewählt werden. Der Schalthebel 50 ist hierzu über eine Hebelanordnung 52 mit einem ersten Zahnrad 53 gekoppelt, welches mit einem auf einer zentralen Schaltwelle 55 angeordneten zweiten Zahnrad 54 kämmt. Das Zahnrad 53 und die Schaltwelle 55 sind in einer Längsrichtung 56 der Schaltwelle verschieblich angeordnet. Eine Schwenkbewegung des Schalthebels 50 in Querrichtung 51 wird somit in eine Drehbewegung des Zahnrads 53 umgesetzt. Durch Verdrehen des Zahnrads 53 wird das damit kämmende Zahnrad 54 und somit die Schaltwelle 55 verdreht. Dadurch können einzelne Schaltgassen angewählt werden.

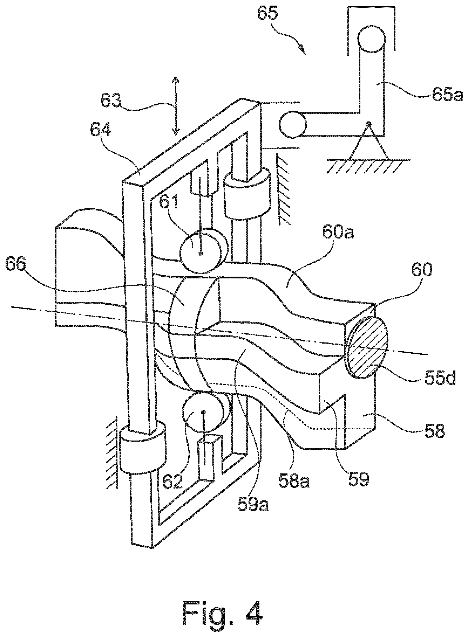

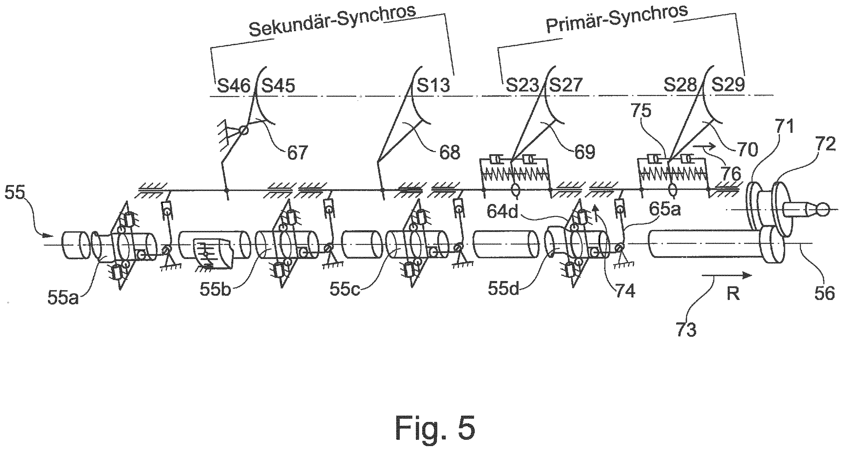

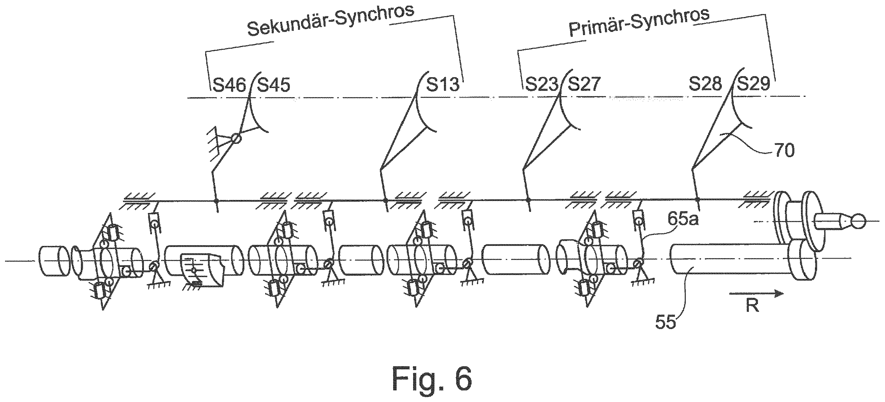

Durch Verschwenken des Schalthebels 50 in einer Längsrichtung 57 können die einer angewählten Schaltgasse zugeordneten Gänge geschaltet, d. h. ein- bzw. ausgelegt werden. Wie oben bereits erwähnt, werden während eines solchen Duo-Synchro-Schaltvorgangs mindestens zwei Schaltelemente geschaltet. Zum Umsetzen der Bewegungen der Schaltwelle 55 in Schaltbewegungen von Schaltelementen ist die Schaltwelle 55 in mehrere Schaltabschnitte unterteilt, was im Zusammenhang mit den Figuren 4 und den Ausführungsbeispielen der Figuren 5 bzw. 6 noch näher erläutert wird.

Beim Ausführungsbeispiel der Figur 5 weist die Schaltwelle 55 vier Schaltabschnitte 55a, 55b, 55c, 55d auf. Figur 4 zeigt in vergrößerter Darstellung die Funktionsweise eines derartigen Schaltabschnitts, beispielsweise des Schaltabschnitts 55d. Der Schaltabschnitt 55d weist in Umfangsrichtung 90° voneinander beabstandet vier radial abstehende Rippen auf, von denen in Figur 4 lediglich 3 Rippen 58, 59, 60 dargestellt sind. Bei einer Schaltung mit fünf nebeneinanderliegenden Schaltgassen wären über den Umfang der Schaltwelle verteilt 5 x 2 = 10 derartige Rippen vorzusehen. Aufeinanderfolgenden Rippen wären demnach um 36° voneinander beabstandet.

Außenflächen 58a, 59a, 60a der Rippen 58 - 60 bilden Kulissenabschnitte. Die Kulissenabschnitte 58a, 60a verlaufen parallel zueinander. Auf ihnen rollt jeweils eine Aufnehmerrolle 61 bzw. 62 beim Verschieben der Schaltwelle 55 in Längsrichtung ab. Wird die Schaltwelle 55 in Längsrichtung verschoben, so rollen die beiden Rollen 61, 62 auf den Kulissenabschnitten 60a bzw. 58a ab, was entsprechend dem Profil der Kulissenabschnitte 60a, 58a zu einer Verschiebung eines Schaltrahmens 64 in einer Radialrichtrung 63 führt. Die beiden Aufnehmerrollen 61, 62 sind an dem Schaltrahmen 64 gelagert. Die Verschiebebewegung des Schaltrahmens 64 in Richtung des Pfeils 63 wird über eine Umsetzungseinrichtung 65, von der hier lediglich ein Hebel 65a dargestellt ist, in eine Schwenkbewegung umgesetzt.

In der in Figur 4 gezeigten Stellung der Schaltwelle 55 kann diese in eine andere Schaltgasse verschwenkt werden. Hierbei gleiten die Aufnehmerrollen 61, 62 auf einem die Rippen 58a, 59a, 60a verbindenden Verbindungsabschnitt 66 entlang. So kann beispielsweise vorgesehen sein, dass die Kulissenabschnitte 58a, 60a der Schaltgasse der Gänge 1, 2 (vgl. Figur 3) zugeordnet ist und der Kulissenabschnitt 59a der Schaltgasse der Schaltgänge 3, 4 oder einer anderen Schaltgasse.

Über die in Figur 5 gezeigten Schaltabschnitte 55a- 55d können in einer bestimmten Drehstellung der Schaltwelle 55 gleichzeitig zwei oder mehr Betätigungselemente 67 - 70 (bei denen es sich z. B. um Schaltgabeln oder Schaltschwingen handeln kann), betätigt werden. Wird eine bestimmte Schaltgasse durch Drehen der Schaltwelle 55 in eine der vorgegebenen Drehstellungen ausgewählt, so kann der Schalthebel 50 (vgl. Figur 3) durch Verschwenken in Richtung 57 in einen der Gänge der betreffenden Schaltgasse geschaltet werden. Ein Verschwenken des Schalthebels 50 in Längsrichtung 57 bewirkt eine entsprechende axiale Verschiebung des Zahnrads 53, von dem eine Verschiebekraft über einen der radial abstehenden Bünde 71, 72 auf die Schaltwelle 55 übertragen wird, wodurch diese in Axialrichtung 56 verschoben wird. Je nach Drehstellung kann beispielsweise vorgesehen sein, dass bei einer axialen Verschiebung der Schaltwelle 55 die beiden Schaltabschnitte 55c und 55d aktiv sind, wodurch beispielsweise über die beiden Schaltgabeln 69, 70 die Schaltelemente S27, S29 geschaltet werden. Es kann vorgesehen sein, dass die übrigen Schaltabschnitte bei einem derartigen Schaltvorgang passiv sind, d. h. dass die zugeordneten Kulissenabschnitte parallel zur Längsrichtung der Schaltwelle 55 sind.

Beispielsweise kann vorgesehen sein, dass in einer vorgegebenen Drehstellung der Schaltwelle 55 bei einem nach rechts Verschieben der Schaltwelle entsprechend dem Pfeil 73 (vgl. Figur 5) der Schaltrahmen 64d entsprechend dem Pfeil 74 nach oben verschoben wird, was zu einem Verschwenken des Hebels 65a und somit zu einem Verschieben des Rahmens 75 in Richtung des Pfeils 76 führt. Das Verschieben des Rahmens 75 in Richtung des Pfeils 76 bewirkt wiederum ein Verschieben bzw. Verschwenken der Schaltgabel bzw. Schaltschwinge 70. Gleichphasig mit der Betätigung der Schaltschwinge 70 oder phasenverschoben überschneidend oder phasenverschoben versetzt kann vorgesehen sein, dass bei einer solchen Betätigung der Schaltwelle 55 auch die Schaltschwinge bzw. Schaltgabel 69 betätigt wird.

Figur 6 zeigt ein Ausführungsbeispiel, bei dem die "Umsetzungseinrichtungen" so konzipiert sind, dass bei einem Verschwenken beispielsweise des Hebels 65a dieser unmittelbar zu einer Betätigung der zugeordneten Schaltschwinge bzw. Schaltgabel 70 führt.

## Patentansprüche

1. Schalteinrichtung zum Schalten eines Getriebes, mit
- mehreren Schaltelementen (S13, S23, S27, S28, S29, S45, S46),
- einer Schaltwelle (55), die in verschiedene Drehstellungen drehbar und zum Schalten einzelner der vorgesehenen Schaltelemente (S13, S23, S27, S28, S29, S45, S46) entlang ihrer Längsachse (56) verschiebbar angeordnet ist,
wobei in mindestens in einer der Drehstellungen der Schaltwelle (55) durch Verschieben der Schaltwelle (55) in der Längsrichtung mindestens zwei der Schaltelemente (S13, S23, S27, S28, S29, S45, S46) betätigbar, insbesondere gleichphasig oder phasenverschoben überschneidend oder phasenverschoben versetzt, sind,
wobei die Schaltwelle (55) mehrere Schaltabschnitte (55a - 55d) aufweist, wobei jedem Schaltabschnitt (55a - 55d) jeweils eine Umsetzungseinrichtung (61 - 65, 70, 75) zugeordnet ist, mittels der eine Verschiebebewegung der Schaltwelle (55) in eine Schaltbewegung eines dem jeweiligen Schaltabschnitt (55a- 55d) zugeordneten Schaltelements umsetzbar ist
**dadurch gekennzeichnet, dass**
jeder der Schaltabschnitte (55a - 55d) mindestens einen sich in Richtung der Längsachse (56) erstreckenden Kulissenabschnitt (58a, 59a, 60a) aufweist, an dem in einer vorgegebenen Drehstellung der Schaltwelle (55) ein Aufnehmer (61, 62) der Umsetzungseinrichtung (61 - 65, 70, 75) anliegt, wobei durch Verschieben der Schaltwelle (55) in Längsrichtung (56) der Aufnehmer (61, 62) in Radialrichtung verschoben wird, entsprechend dem Profil des Kulissenabschnitts (58a, 59a).

2. Schalteinrichtung nach Anspruch 1, **dadurch gekennzeichnet, dass** jeder der Schaltabschnitte (55a - 55d) ein sich in Richtung der Längsachse (56) der Schaltwelle (55) veränderndes Querschnittsprofil aufweist.

3. Schalteinrichtung nach Anspruch 1 oder 2, **dadurch gekennzeichnet, dass** der Aufnehmer durch einen Gleitstein oder eine drehbar gelagerte Rolle (61, 62) gebildet ist, welcher bzw. welche an einem radial verschieblich angeordneten Rahmen (64) gelagert ist.

4. Schalteinrichtung nach einem der Ansprüche vorangehenden Ansprüche, **dadurch gekennzeichnet, dass** mindestens einer der Schaltabschnitte (55a - 55d) mindestens zwei in Umfangsrichtung der Schaltwelle voneinander beabstandete Kulissenabschnitte (58a, 59a, 60a) aufweist.

5. Schalteinrichtung nach einem der vorangehenden Ansprüche, **dadurch gekennzeichnet, dass** mindestens einer der Schaltabschnitte (55a - 55d) mindestens zwei in Umfangsrichtung der Schaltwelle (55) voneinander beabstandete, radial abstehende Rippen (58, 59, 60) aufweist, deren radiale Außenflächen die Kulissenabschnitte (58a, 59a, 60a) bilden.

6. Schalteinrichtung nach Anspruch 5, **dadurch gekennzeichnet, dass** die Rippen (58 - 60) über einen sich in Umfangsrichtung erstreckenden Verbindungsabschnitt (66) miteinander verbunden sind.

7. Schalteinrichtung nach einem der vorangehenden Ansprüche, **dadurch gekennzeichnet, dass** ein von Hand zu betätigender Schalthebel (50) vorgesehen ist, der über eine Kopplungseinrichtung (52) mit der Schaltwelle (55) gekoppelt ist.

8. Schalteinrichtung nach Anspruch 7, **dadurch gekennzeichnet, dass** die Kopplungseinrichtung (52) erste Kopplungselemente (53, 54) aufweist, welche eine Quer-Schwenkbewegung des Schalthebels (50) in eine Drehbewegung der Schaltwelle (55) umsetzen.

9. Schalteinrichtung nach einem der Ansprüche 7 oder 8, **dadurch gekennzeichnet, dass** die Kopplungseinrichtung zweite Kopplungselemente (71, 72) aufweist, welche eine Längs-Schwenkbewegung des Schalthebels (50) in eine Verschiebebewegung der Schaltwelle (55) umsetzen.

10. Schalteinrichtung nach einem der Ansprüche 7 bis 9, **dadurch gekennzeichnet, dass** der Schalthebel (50) gemäß eines H-Schaltschemas verschwenkbar ist, nämlich in einer Querrichtung (51) zum Anwählen einzelner Schaltgassen sowie in Längsrichtungen zum Ein- oder Auslegen einzelner, den jeweiligen Schaltgassen zugeordneter Gänge.

11. Schalteinrichtung nach einem der vorangegangenen Ansprüche, **dadurch gekennzeichnet, dass** Schaltwelle parallel oder senkrecht zu einer Getriebelängsrichtung, insbesondere zu einer Getriebeeingangs- oder ausgangswelle angeordnet ist.

## Claims

1. A gear-change means for changing gear in a gearbox, with
- a plurality of gear-change elements (S13, S23, S27, S28, S29, S45, S46),
- a gear-change shaft (55) which is arranged so that it can be rotated into various rotary positions and, for selecting individual ones of the gear-change elements (S13, S23, S27, S28, S29, S45, S46) provided, is arranged to be displaceable along its longitudinal axis (56),
wherein in at least in one of the rotary positions of the gear-change shaft (55) at least two of the gear-change elements (S13, S23, S27, S28, S29, S45, S46) can be actuated, especially in phase or with an overlapping or offset phase shift, by displacing the gear-change shaft (55) in the longitudinal direction,
wherein the gear-change shaft (55) has a plurality of gear-change portions (55a - 55d),
wherein one conversion means (61 - 65, 70, 75) in each case is associated with each gear-change portion (55a - 55d), by means of which means a displacement movement of the gear-change shaft (55) can be converted into a shift movement of a gearshift element which is associated with the respective gear-change portion (55a - 55d),
**characterised in that**
each of the gear-change portions (55a - 55d) has at least one slideway portion (58a, 59a, 60a) extending in the direction of the longitudinal axis (56), against which in a specified rotary position of the gear-change shaft (55) a pickup (61, 62) of the conversion means (61 - 65, 70, 75) bears, with the pickup (61, 62) being displaced in the radial direction, corresponding to the profile of the slideway portion (58a, 59a), by displacing the gear-change shaft (55) in the longitudinal direction (56).

2. A gear-change means according to Claim 1, **characterised in that** each of the gear-change portions (55a - 55d) has a cross-sectional profile which changes in the direction of the longitudinal axis (56) of the gear-change shaft (55).

3. A gear-change means according to Claim 1 or Claim 2, **characterised in that** the pickup is formed by a sliding block or a rotatably mounted roller (61, 62) which is mounted on a frame (64) arranged radially displaceably.

4. A gear-change means according to one of the preceding claims, **characterised in that** at least one of the gear-change portions (55a - 55d) has at least two slideway portions (58a, 59a, 60a) which are spaced apart from each other in the peripheral direction of the gear-change shaft.

5. A gear-change means according to one of the preceding claims, **characterised in that** at least one of the gear-change portions (55a - 55d) has at least two radially protruding ribs (58, 59, 60) which are spaced apart from each other in the peripheral direction of the gear-change shaft (55), the radial outer surfaces of which ribs form the slideway portions (58a, 59a, 60a).

6. A gear-change means according to Claim 5, **characterised in that** the ribs (58 - 60) are connected together by way of a connection portion (66) extending in the peripheral direction.

7. A gear-change means according to one of the preceding claims, **characterised in that** a manually actuated gear lever (50) is provided which is coupled with the gear-change shaft (55) by way of a coupling means (52).

8. A gear-change means according to Claim 7, **characterised in that** the coupling means (52) has first coupling elements (53, 54) which convert a transversely-pivoting movement of the gear lever (50) into a rotary movement of the gear-change shaft (55).

9. A gear-change means according to one of Claims 7 or 8, **characterised in that** the coupling means has second coupling elements (71, 72) which convert a longitudinal pivoting movement of the gear lever (50) into a displacement movement of the gear-change shaft (55).

10. A gear-change means according to one of Claims 7 to 9, **characterised in that** the gear lever (50) can be pivoted in a H-shift pattern, namely in a transverse direction (51) for selecting individual shift gates and also in longitudinal directions for engaging or disengaging individual gears associated with the respective shift gates.

11. A gear-change means according to one of the preceding claims, **characterised in that** gear-change shaft is arranged parallel or perpendicular to a gearbox longitudinal direction, especially to a gearbox input or output shaft.

## Revendications

1. Dispositif de commutation pour la commutation d'une boîte de vitesses comprenant :
- plusieurs éléments de changement de vitesse (S13, S23, S27, S28, S29, S45, S46),
- un arbre de changement de vitesse (55) qui est monté mobile en rotation dans différentes positions de rotation, et mobile en translation le long de son axe longitudinal (56) pour permettre de commuter des éléments de changement de vitesse individuels parmi les éléments de changement de vitesse (S13, S23, S27, S28, S29, S45, S46),
dispositif dans lequel,
au moins dans l'une des positions de rotation de l'arbre de changement de vitesse (55), par déplacement de cet arbre (55) dans la direction longitudinale, au moins deux des éléments de changement de vitesse (S13, S23, S27, S28, S29, S45, S46) peuvent être actionnés, en particulier en se chevauchant en phase ou avec un décalage de phase, ou en étant déplacés avec un décalage de phase,
l'arbre de changement de vitesse (55) comporte plusieurs segments de changement de vitesse (55a-55d), à chaque segment de changement de vitesse (55a-55d) étant respectivement associé un dispositif de conversion (61-65, 70, 75) au moyen duquel une translation de l'arbre de changement de vitesse (55) peut être transformée en un mouvement de commutation d'un élément de changement de vitesse associé au segment de changement de vitesse (55a-55d) respectif,
**caractérisé en ce que**
chacun des segments de changement de vitesse (55a-55d) comporte au moins un segment de coulisse (58a, 59a, 60a) s'étendant dans la direction de l'axe longitudinal (56) sur lequel dans une position de rotation prédéfinie de l'arbre de changement de vitesse (55) s'applique un organe de saisie (61, 62) du dispositif de conversion (61-65, 70, 75), un déplacement de l'arbre de changement de vitesse (55) dans la direction longitudinale (56) entraînant un déplacement de l'organe de saisie (61, 62) en direction axiale conformément au profil du segment de coulisse (58a, 59a).

2. Dispositif de commutation conforme à la revendication 1, **caractérisé en ce que**
chacun des segments de changement de vitesse (55a-55d) a un profil de segment transversale variant dans la direction de l'axe longitudinal (56) de l'arbre de changement de vitesse (55).

3. Dispositif de commutation conforme à la revendication 1 ou 2, **caractérisé en ce que**
l'organe de saisie est formé par un coulisseau ou un rouleau monté mobile en rotation (61, 62) qui est monté sur un cadre (64) mobile en translation en direction radiale.

4. Dispositif de commutation conforme à l'une des revendications précédentes,
**caractérisé en ce qu'**
au moins l'un des segments de changement de vitesse (55a-55d) comporte au moins deux segments de coulisse (58a, 59a, 60a) situés à distance l'un de l'autre dans la direction périphérique de l'arbre de changement de vitesse.

5. Dispositif de commutation conforme à l'une des revendications précédentes,
**caractérisé en ce qu'**
au moins l'un des segments de changement de vitesse (55a-55d) comporte au moins deux nervures radialement en saillie situées à distance l'une de l'autre dans la direction périphérique de l'arbre de changement de vitesse (55), et dont les surfaces radiales externes forment les segments de coulisse (58a, 59a, 60a).

6. Dispositif de commutation conforme à la revendication 5, **caractérisé en ce que**
les nervures (58-60) sont reliées par un segment de liaison (66) s'étendant dans la direction périphérique.

7. Dispositif de commutation conforme à l'une des revendications précédentes,
**caractérisé en ce qu'**
il est prévu un levier de vitesse (50) à actionnement manuel qui est couplé à l'arbre de changement de vitesse (55) par l'intermédiaire d'un dispositif de couplage (52).

8. Dispositif de commutation conforme à la revendication 7, **caractérisé en ce que**
le dispositif de couplage (52) comporte des premiers éléments de couplage (53, 54) qui transforment un mouvement de pivotement transversal du levier de vitesse (50) en un mouvement de rotation de l'arbre de changement de vitesse (55).

9. Dispositif de commutation conforme à l'une des revendications 7 et 8,
**caractérisé en ce que**
le dispositif de couplage comporte des seconds éléments de couplage (71, 72) qui transforment un mouvement de pivotement longitudinal du levier de vitesse (50) en un mouvement de translation de l'arbre de changement de vitesse (55).

10. Dispositif de commutation conforme à l'une des revendications 7 à 9,
**caractérisé en ce que**
le levier de vitesse (50) peut pivoter selon un schéma de commutation en H, à savoir dans une direction transversale (51) pour permettre de sélectionner des voies de commutation individuelles ainsi que dans des directions longitudinales pour permettre d'engager ou de libérer des vitesses individuelles associées aux voies de commutation respectives.

11. Dispositif de commutation conforme à l'une des revendications précédentes,
**caractérisé en ce que**
l'arbre de changement de vitesse est monté parallèlement ou perpendiculairement à la direction longitudinale de la boîte de vitesse, en particulier à l'arbre d'entrée ou de sortie de la boîte de vitesses.
